(19) Europäisches Patentamt

European Patent Office

Office européen des brevets

(11) **EP 3 315 195 A1**

(12) **EUROPEAN PATENT APPLICATION**

(43) Date of publication:
**02.05.2018  Bulletin 2018/18**

(51) Int Cl.:
***B01J 37/02*** *(2006.01)*        ***B01J 38/62*** *(2006.01)*
***B01J 23/85*** *(2006.01)*        ***B01J 31/06*** *(2006.01)*
***C10G 45/08*** *(2006.01)*

(21) Application number: **16382495.6**

(22) Date of filing: **28.10.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Repsol, S.A.**
**28045 Madrid (ES)**

(72) Inventors:
• **Gómez Martin, Juan Pedro**
 **28935 Móstoles (ES)**

• **Muelas Parraga, Jesús**
 **28935 Móstoles (ES)**
• **Cano Chacon, Diana**
 **28935 Móstoles (ES)**
• **Serrano Fernández, Francisco Luis**
 **28935 Móstoles (ES)**
• **Gómez Sanz, Sara**
 **28935 Móstoles (ES)**

(74) Representative: **ZBM Patents - Zea, Barlocci & Markvardsen**
**Plaza Catalunya, 1 2nd floor**
**08002 Barcelona (ES)**

(54) **PROCESSES FOR ACTIVATING AN HYDROTREATING CATALYST**

(57)    A method for improving the catalytic activity of an hydrotreating catalyst which comprises contacting the catalyst with an stable aqueous impregnation solution comprising a nickel salt of a carboxylic acid or a nickel salt of an inorganic acid and an organic additive having complexing properties with the hydrogenation metals present in the catalyst. The disclosure also relates to the hydrotreating catalyst obtainable by the process of the invention and a process for hydrotreating a hydrocarbon feed in which a hydrocarbon feed is contacted under hydrotreating conditions with a hydrotreating catalyst according to the invention.

**EP 3 315 195 A1**

**Description**

The present disclosure relates to processes for activating an hydrotreating catalyst, the resulting activated hydrotreating catalysts and its use in hydroprocessing.

BACKGROUND ART

Catalytic hydroprocessing is used extensively to upgrade petroleum heavy oils to more valuable fuels in the presence of hydrogen and a catalyst under appropiate temperature and pressure conditions. The catalyst facilitates the removal of undesirable impurities such as sulfur, nitrogen, oxygen and metals present in the oil by hydrodesulfurization (HDS), hydrodenitrogenation (HDN), hydrodeoxygenation (HDO) and hydrodemetallation (HDM) reactions, and fragmentation of the high molecular weight components of the oils to lighter products by hydrocracking.

However, these catalysts lose activity with time due to coke and/or metals deposition on the active sites of the catalyst surface. Poisoning and sintering are other causes of catalysts deactivation.

Since the catalysts used for hydrotreating are found to deactivate as a result of the deposition of coke and metals, it is necessary to remove these contaminants from the catalysts in order to reactivate and reuse them. The process of coke removal is referred to in the art as regeneration. Regeneration of hydrotreating catalysts by coke combustion and gasification is extensively employed in the art. On the other hand, while coke is removed completely, the metallic impurities remain on the catalysts and act as a diffusion barrier to the reactants. Therefore, to reactivate such spent catalysts it is necessary to remove the deposited metals by special treatments. The process of metal deposits removal is referred to in the art as rejuvenation.

Although a regenerated and/or rejuvenated catalyst may be reused in hydrotreating processes, its relative volumetric activity (RVA) is lower than the RVA value for the fresh catalyst.

In the international application WO2005035691 it is described a process for activating an hydrotreating catalyst comprising a Group VIB metal oxide and an Group VIII metal oxide, the process comprising contacting the catalyst with an acid and an organic additive which has a boiling point in the range 80-500 °C and a solubility in water of at least 5 grams per liter (20 °C, atmospheric pressure). The catalyst is subjected to an aging step after the incorporation of the acid, while the catalyst is still wet. Once the regenerated catalyst is impregnated, it is dried overnight at a temperature ranging from 90 °C to 120 °C. Best results obtained in WO2005035691 correspond to example 5, wherein a regenerated catalyst is activated with 10 wt% citric acid and 10 wt% PEG, resulting in an activity (RVA) of 97 % as compared with the activity of the fresh catalyst.

EP1718408 discloses a method for restoring catalytic activity of a spent hydroprocessing catalyst, said method comprising reducing the concentration of carbon in the range between 0.5 wt% to 2.5 wt% by contacting said spent catalyst with an oxygen-containing gas under carbon burning conditions; contacting said carbon-reduced catalyst with a solution comprising a chelating agent and a solvent so as to incorporate said chelating agent; aging said carbon-reduced catalyst having incorporated therein said solution for a period between 40 to 750 hours; drying said aged catalyst and sulfur treating the dried catalyst to thus provide the reactivated catalyst. The chelating agent is selected from aminocarboxylic acids, polyamines, aminoalcohols, oximes and polyethyleneimines.

The international application WO9641848 discloses a process for activating a hydrotreating catalyst comprising a Group VIII hydrogenation metal oxide and a Group VI hydrogenation metal oxide on a carrier in which the catalyst is contacted with an additive which is at least one compound selected from the group of compounds comprising at least two hydroxyl groups and 2-10 carbon atoms, and the (poly)ethers of these compounds, after which the catalyst is dried under such conditions so that at least 50% of the additive remains in the catalyst. The additive is selected from ethylene glycol, diethylene glycol, polyethylene glycol, a saccharide or a polysaccharide.

From what is known in the art it is derived that there is a need for a process for improving the catalytic activity of an hydrotreating catalyst comprising as hydrogenation metals at least a group VIB metal oxide and at least a Group VIII metal oxide on a carrier, the hydrotreating catalyst being either a fresh hydrotreating catalyst or a used hydrotreating catalyst which has been regenerated.

SUMMARY

In a first aspect, it is provided a process for improving the catalytic activity of an hydrotreating catalyst comprising as hydrogenation metals at least a group VIB metal oxide and at least a Group VIII metal oxide on a carrier, the hydrotreating catalyst being either a fresh hydrotreating catalyst or a used hydrotreating catalyst which has been regenerated. The process comprising: i) contacting the catalyst with an stable aqueous impregnation solution and ii) drying the impregnated catalyst.

This impregnation solution comprises:

a) a nickel salt of a carboxylic acid or a nickel salt of an inorganic acid; and

b) an organic additive having complexing properties with the hydrogenation metals present in the catalyst, which is selected from

- an aliphatic alcohol or a (poly)ether of an aliphatic alcohol comprising at least two hydroxyl groups and 2-10 carbon atoms per molecule, with a boiling point from 150 to 300 °C, and completely soluble in water at 25°C
- a compound comprising at least one covalently bonded nitrogen atom and at least one carbonyl moiety; and
- an organic acid comprising at least one carboxylic group and 1-20 carbon atoms;
  wherein the nickel salt concentration ranges from 15 to 70 g/L; and the organic additive concentration ranges from 50 to 300 g/L;

Drying step of the impregnated catalyst is performed so as to remove at least 90% of the water of the aqueous solution.

The process is suitable for activating a hydrotreating catalyst which is either a fresh hydrotreating catalyst or a used hydrotreating catalyst which has been regenerated.

With regard to the specific conditions for carrying out the process of the invention, the skilled person would know how to adjust the parameters of each of the steps indicated above in the light of the description and examples of the present invention.

The impregnation solution must be stable, i.e. it does not precipitate over at least 24 h time period at ambient temperature.

With the process of the present disclosure, both the nickel salt and the organic additive remain in the catalyst, thus resulting in an improvement of its catalytic activity.

Therefore, the present disclosure also relates to the hydrotreating catalyst obtainable by the process described above. Thus, another aspect of the present disclosure relates to an hydrotreating catalyst, obtainable by a process comprising the steps i) and ii) as defined above.

Furthermore, in a third aspect, it is provided a process for hydrotreating a hydrocarbon feed in which a hydrocarbon feed is contacted under hydrotreating conditions with a catalyst according to the present disclosure, which optionally has beed presulphided before it is contacted with the hydrocarbon feed.

BRIEF DESCRIPTION OF THE DRAWINGS

Non-limiting examples of the present disclosure will be described in the following, with reference to the appended drawings, in which:

Fig. 1 depicts the sulfur concentration in the product stream at different reaction temperatures for the regenerated catalyst (♦), the regenerated catalyst reactivated with DPG (▲) and the regenerated catalyst reactivated with citric acid (■)

Fig. 2 depicts the sulfur concentration of the product stream at different reaction temperatures for the regenerated catalyst (♦) and the regenerated catalyst reactivated with DPG + nickel acetate (▲)

Fig. 3 depicts the sulfur concentration in the product stream as a function of reaction temperature for the fresh catalyst (♦) and the fresh catalyst after reactivation with DPG + nickel acetate (▲)

Fig. 4 depicts the sulfur concentration in the product stream as a function of reaction temperature for the regenerated catalyst reactivated with DPG (♦) and the reactivated catalyst reactivated with DPG + nickel acetate (▲)

Fig. 5 depicts the sulfur concentration in the product stream as a function of reaction temperature for the regenerated catalyst (♦), the regenerated catalyst reactivated with nickel acetate (▲) and the regenerated catalyst reactivated with DPG + nickel acetate (■)

Fig. 6 shows the correlation between RVA values and the $\%Co_3O_4$ / T(CoMo) for the regenerated catalyst, the catalyst reactivated with nickel acetate and the catalyst reactivated with DPG + nickel acetate.

Fig. 7 depicts the TPR profile of the regenerated catalysts reactivated with i) DPG + nickel acetate and ii) DPG + acetic acid. (a.u. = arbitrary units)

Fig. 8 depicts the TPR profile of the regenerated catalysts reactivated with i) DPG + nickel acetate and ii) DPG + nickel nitrate. (a.u. = arbitrary units)

Fig. 9 shows the TPR profiles of the regenerated catalysts reactivated with 300 g/l of DPG and varying concentrations of nickel acetate (15, 24.5 and 70 g/l). (a.u. = arbitrary units)

Fig. 10 shows the TPR profiles of the regenerated catalysts reactivated with 24.5 g/l of nickel acetate and varying concentrations of DPG (160, 194 and 300 g/l). (a.u. = arbitrary units)

DETAILED DESCRIPTION

For the purposes of the invention, any ranges given include both the lower and the upper end-points of the range. Ranges given, such as temperatures, concentrations, and the like, should be considered approximate, unless specifically stated.

The present disclosure refers to a method for activating an hydrotreating catalyst comprising as hydrogenation metals at least a group VIB metal oxide and at least a Group VIII metal oxide on a carrier, which is either a fresh hydrotreating catalyst or a used hydrotreating catalyst which has been regenerated.

Regeneration of the used catalyst may be done by any known method in the art. Thus, for example, regeneration of the used catalyst may be done by contacting the used catalyst with a gas containing oxygen under carbon burning conditions and controlling the amount of carbon removed from the used catalyst.

In the context of the present disclosure, Group VIb metals include molybdenum, tungsten and chromium, preferably molybdenum. Group VIII metals comprise nickel, cobalt and iron. Nickel, cobalt and their combination is preferred.

The catalyst preparation procedure is not limiting for performing the method of improving its catalytic activity according to the present disclosure. The skilled person in the art can choose between different methods known in the art for preparing the hydrotreating catalysts. Thus, it is known in the art methods for preparing a catalyst by impregnation of a carrier substance with a solution containing hydrotreating metal elements. The skilled person in the art may use any known hydrotreating catalyst, comprising as hydrogenation metals at least a group VIB metal oxide and at least a Group VIII metal oxide on a carrier. The hydrotreating catalyst used herein may be an hydrotreating catalyst prepared by a process in which hydrogenation metal components are deposited on a carrier, after which the composite material thus obtained is subjected to a calcination step to convert the hydrogenation metal components into their oxides.

Although not critical for the method of the present disclosure, generally the hydrotreating catalyst has a metal oxide content in the range from 5 to 50 wt% wherein the metal oxide content refers to the sum of both the at least a group VIB metal oxide and at least a Group VIII metal oxide. Said percentages indicate the amount of metals based on the total weight of the support material. Preferably, the metal oxide content is from 20% to 40 wt%.

In accordance with a particular embodiment, optionally in combination with one or more features of the particular embodiments defined herein, the hydrotreating catalyst comprises as catalytically active material supported on the support material at least a molibdenum oxide and at least an oxide compound or nickel or cobalt. The cobalt oxide may exist as different phases in the form of cobalt oxide (II) (CoO), cobalt oxide (III) ($Co_2O_3$), cobalt oxide (II, III) ($Co_3O_4$), and other less stable phases such as cobalt oxyhydroxide (CoO(OH)) or other cobalt oxide ($CoO_2$). There may also be a mixture thereof in a same material. In a particular embodiment, the catalytically active material is a mixture of CoO and $Co_3O_4$ in a ratio from 10 : 1 to 1 : 10 by weight.

The carrier may be any material that suitably provides a support for the metal hydrogenation components of the hydrotreating catalyst. Example of possible carriers include silicon oxide (silica), aluminium oxide (alumina), magnesium oxide (magnesia), titanium oxide (titania), zirconium oxide (zirconia), silicatitania, silica-zirconia, titania-alumina, zirconia-alumina, silica-alumina, aluminium-silicon mixed oxide (alumino-silicate). According to a particular embodiment, the support material is an aluminium-silicon mixed oxide (aluminosilicate), said aluminosilicate being preferably a natural zeolite. According to another particular embodiment, the support material is an aluminium oxide (alumina), which can be of various forms, such as, alphaalumina, beta-alumina, gamma-alumina, delta-alumina, eta-alumina, tethaalumina, and mixtures thereof. Particularly preferred is an amorphous alumina such as gamma-alumina. According to another particular embodiment, the support material is a mixture of at least one natural zeolite and at least one alumina.

In accordance with an embodiment of the present disclosure, optionally in combination with one or more features of the particular embodiments defined herein, the organic additive is at least an aliphatic alcohol or a (poly)ether of an aliphatic alcohol comprising at least two hydroxyl groups and 2-10 carbon atoms per molecule, with a boiling point from 150 to 300 °C, and completely soluble in water at 25°C. Preferably, organic additive is at least monoethylene glycol, monopropylene glycol, glycerol, dipropylene glycol, tripropylene glycol, polypropylene glycol, , diethylene glycol, triethylene glycol, tetraethylene glycol and polyethylene glycol.

In another embodiment, optionally in combination with one or more features of the particular embodiments defined herein, the organic additive is at least an organic acid comprising at least one carboxylic group and 1-20 carbon atoms selected from acetic acid, citric acid, maleic acid, formic acid, glycolic acid, tartaric acid, oxalic acid and ascorbic acid.

In a further embodiment, optionally in combination with one or more features of the particular embodiments defined herein, the organic additive is at least a compound comprising at least one covalently bonded nitrogen atom and at least one carbonyl moiety, preferably selected from EDTA and nitrilotriacetic acid.

In a preferred embodiment, optionally in combination with one or more features of the particular embodiments defined herein, the organic additive is selected from monopropylene glycol, dipropylene glycol, ethylene glycol, diethylene glycol, polyethylene glycol, acetic acid, citric acid, maleic acid, formic acid, glycolic acid, tartaric acid, oxalic acid, ascorbic acid. In a more preferred embodiment, optionally in combination with one or more features of the particular embodiments defined herein, the organic additive is selected from dipropylene glycol and citric acid; being particularly preferred dipropylene glycol.

Regarding the nickel salts of a carboxylic acid, in accordance with an embodiment of the present disclosure, optionally in combination with one or more features of the particular embodiments defined herein, the nickel salt is selected from nickel acetate, nickel carbonate, nickel citrate and nickel formiate. Preferably, the nickel salt is nickel acetate tetrahydrate.

In a particularly preferred embodiment, optionally in combination with one or more features of the particular embodiments defined herein, the stable impregnation aqueous solution comprises nickel acetate tetrahydrate and dipropylenglicol.

In accordance with a particular embodiment of the present disclosure, optionally in combination with one or more features of the particular embodiments defined herein, the molar ratio between the amount of organic additive and the amount of hydrogenation metals (Mo, Co, Ni) in the hydrotreating catalyst is from 0.09:1 to 0.8:1, preferably from 0.2:1 to 0.6:1; and the molar ratio between the amount of nickel salt and the amount of hydrogenation metals (Mo, Co, Ni) in the hydrotreating catalyst is from 0.001:1 to 0.2:1, preferably from 0.006:1 to 0.05:1.

The skilled person in the art may know that in the preparation of hydrotreating catalyst it may be possible to use additional components, such as binders or agglomerants.

The used hydrotreating catalyst may have a relative volumetric activity (RVA) that is reduced below the RVA of an hydrotreating catalyst in its fresh state prior to be used in a hydrotreating process. Generally, an used hydrotreating catalyst may be considered spent when the RVA is less than 50%

As used in the present disclosure, the term "relative volumetric activity" (RVA) refers to the catalytic activity of a specific catalyst after being used relative to the catalytic activity of the specific catalyst in its fresh state. Therefore, RVA of a fresh catalyst is 1.

In accordance with the present disclosure, the process to measuring the RVA of a catalyst is performed in a pilot plant under hydrodesulfuration conditions, wherein the process comprises the following steps:

    a) Sulfidation
    b) Stabilization
    c) Reaction

a) Sulfidation:

The sulfidation of the catalysts is carried out in situ within the reactor. It may comprise the following stages:

- Drying. $H_2$ flow is set at 150-300 Nl/h and pressurized to 25-35 kg/cm$^2$. The temperature is increased to 150-170 °C, at 25°C/hour.
- Wetting. The reactor is fed with Straight Run Gas Oil + 2% wt%. dimethyl disulfide at LHSV 1.5-2.5 h$^{-1}$. The reactor outlet is blocked and pressurized to 50-60 kg / cm$^2$. The reactor is kept blocked under these conditions for a period of 1 to 2h.
- Sulfidation at low temperature. The reactor is depressurized to 25-30 kg / cm$^2$ and the sulfidation feed is fed at LHSV = 07-1.3 h$^{-1}$. The hydrogen/hydrocarbon ratio (H /HC) is set to 250-350 Nl/l. The temperature is increased to 300-320 °C at 20 °C/h and is maintained at 300-320 °C for a period from 9 to 15h

b) Stabilization. Once the catalyst sulfidation is finished, the catalyst is kept under constant pressure (50 kg/cm$^2$), temperature (350 °C), LHSV (1 h$^{-1}$) and hydrogen/hydrocarbon ratio (250 Nl/l).

c) Reaction. After the stabilization step, the reaction conditions are set to the values shown in Table 1:

Table 1. Reaction conditions of the catalytic activity tests

| Feed | Straight Run Gasoil |
|---|---|
| Pressure (kg/cm$^2$) | 50 |
| H$_2$/HC (Nl/l) | 250 |
| LHSV (h$^{-1}$) | 0.8 |
| T (°C) | Range between 320-380 °C in order to achieve sulfur concentration in the reaction product between S < 10 ppm - S > 40 ppm |

As mentioned herein, the process for improving the catalytic activity of the present disclosure may be used not only in regeneraded catalysts but also in fresh catalysts after use. When the process for improving the catalytic activity of the present disclosure is performed in used regenerated catalysts, it results in an improvement in the activity which may be at least from 90 to 95% the catalytic activity of the fresh catalyst prior to use, and preferably higher than 98%. When the process for improving the catalytic activity of the present disclosure is performed in fresh catalysts, it results in an improvement in the activity which may be at least 2% higher than the catalytic activity of the fresh catalyst prior to use; preferably at least 5% higher and more preferably at least 10% higher than the catalytic activity of the fresh catalyst prior to use.

Additionally, it is remarkable the improvements achieved in the process economy, since no ageing step is necessary and the amount of the different components of the activation solution are significantly low as compared to the amounts required in the activation solutions used in the state of the art. Nevertheless, although not mandatory, it is also possible to perform an ageing step after the impregnation and/or drying steps. The skilled person in the art knows different methods and conditions to carry out such ageing step.

In accordance with an embodiment of the present disclosure, optionally in combination with one or more features of the particular embodiments defined herein, the hydrotreating catalyst may be an used hydrotreating catalyst which has been regenerated and optionally rejuvenated by any known methods for regeneration and rejuvenation in the art.

In accordance with an embodiment of the present disclosure, optionally in combination with one or more features of the particular embodiments defined herein, the hydrotreating catalyst is impregnated with the stable impregnation aqueous solution. Thus, the catalyst support is first dried at a temperature higher than 110 °C for at least 12 h; preferably for 24 h, once it is dried, it is impregnated with the stable aqueous solution in the kneader following the pore volume impreganation or incipient wetness. The impregnation time is from 30 to 60 min and without ageing step. The catalyst precursor is then dried at a temperature ranging from 100 to 200 °C for 15 minutes to 6 hours, preferably, at a temperature ranging from 100 to 180 °C for 20-180 minutes, more preferably 100-150 °C for 30-90 minutes.

In a particular embodiment, optionally in combination with one or more features of the particular embodiments defined herein, the impregnation step of the catalyst with the impregnation solution is carried out with the total volume of the impregnation solution being in the range of the total pore volume of the catalyst to be impregnated. As will be clear for the skilled person in the art, in this method, known as pore volume impregnation, the exact amount of nickel salt and organic additive in the impregnation solution, as well as the impregnation conditions will depend upon a variety of parameters including metals content of the catalyst, the pore volume and pore size distribution of the catalyst, the nature of the nickel salt and organic additive, etc.

Nevertheless, in accordance with a particular embodiment, optionally in combination with one or more features of the particular embodiments defined herein, the nickel salt concentration ranges from 15 to 70 g/L; and the organic additive concentration ranges from 50 to 300 g/L. Preferably, the nickel salt concentration ranges from 20 to 60 g/L, more preferably from 25 to 40 g/L; and the organic additive concentration is in the range from 100 to 200 g/L, more preferably from 125 to 175 g/L.

In accordance with an embodiment of the present disclosure, optionally in combination with one or more features of the particular embodiments defined herein, it is possible to apply a plurality of impregnation steps, the impregnating solutions to be used may contain one or more of the impregnating components or a portion thereof.

The skilled person in the art knows that instead of impregnating techniques there may be used any other known methods such as dipping methods, spraying methods, etc., in order to incorporate the nickel salt and the organic additive to the catalyst. Multiple impregnation, dipping, spraying methods, etc., may be carried out in between.

After the impregnation step, the impregnated catalyst is dried to remove at least 90% w/w of the water of the aqueous solution. Preferably 95% w/w, more preferably at least 98% w/w.

The drying step (after impregnation) may be effected under such conditions that both the nickel salt and the organic additive remain in the catalyst. It has been observed that using the stable impregnation aqueous solution as described in the present disclosure, drying conditions may be significantly reduced, resulting in an improvement in the process economy. Thus, although other temperatures and time conditions may also be employed, it is possible to perform

6

the drying step at a temperature ranging from 100 to 200 °C for 15 minutes to 6 hours. Preferably, at a temperature ranging from 100 to 180 °C for 20-180 minutes, more preferably 100-150 °C for 30-90 minutes.

The drying step may be carried out in air, under vacuum, or in inert gas. The skilled in the art may choose any of the drying methods and conditions suitable to remove at least 90% of water while both the nickel salt and the organic additive remain in the catalyst.

In a preferred embodiment of the process of the present disclosure, the catalyst is not subjected to an ageing step after the impregnation and/or drying steps.

In accordance with an embodiment, optionally in combination with one or more features of the particular embodiments defined herein, after the drying step the hydrotreating catalyst is subjected to a sulfiding step before it is used in the hydrocarbon feeds hydrotreating. The skilled person in the art knows different methods to perform such a sulfiding step. For example, it is possible to contact the catalyst with inorganic or organic sulfur containing compouds, such as hydrogen sulfide, elemental sulfur, or organic polysulfides.

As hydrotreating catalyst, different catalysts may be used, which differ in their composition and properties depending on their final use, i.e. on the hydrotreating reaction. Thus, the process according to the present disclosure may be useful when the hydrotreating catalyst to be activated is a hydrogenation catalyst, hydrodesulfuration catalyst, hydrodenitrogenation catalyst, hydrodemetallization catalyst, hydrofinishing catalyst, hydrodearomatization catalyst, hydroisomerization catalyst, hydrodewaxing catalyst or a hydrocracking catalyst. Particularly preferred are hydrodesulfuration catalysts.

Furthermore, the present disclosure also relates to the hydrotreating catalyst obtainable by the process described above. Thus, another aspect of the present disclosure relates to an hydrotreating catalyst, having improved its catalytic activity as compared to the fresh or regenerated catalyst, which has undergone the process comprising the steps i) and ii) as defined above. Particularly, the present disclosure relates to an hydrotreating catalyst comprising as hydrogenation metals at least a group VIB metal oxide and at least a Group VIII metal oxide on a carrier, the hydrotreating catalyst being either a fresh hydrotreating catalyst or an used hydrotreating catalyst which has been regenerated, and wherein the process comprises the steps:

    i) contacting the catalyst with an stable aqueous impregnation solution comprising:

        a) a nickel salt of a carboxylic acid or a nickel salt of an inorganic acid; and
        b) an organic additive having complexing properties with the hydrogenation metals present in the catalyst, which is selected from

        -  an aliphatic alcohol or a (poly)ether of an aliphatic alcohol comprising at least two hydroxyl groups and 2-10 carbon atoms per molecule, with a boiling point in the range from 150-300 °C, and completely soluble in water at 25°C
        -  a compound comprising at least one covalently bonded nitrogen atom and at least one carbonyl moiety; and
        -  an organic acid comprising at least one carboxylic group and 1-20 carbon atoms;
        wherein the nickel salt concentration in the impregnation solution is in the range from 15 to 70 g/L; and the organic additive concentration in the impregnation solution is in the range from 50 to 300 g/L, resulting in an impregnated catalyst; and

    ii) drying the impregnated catalyst so as to remove at least 90% of the water of the aqueous solution.

In accordance with a particular embodiment, the hydrotreating catalyst is obtained following the process of the present disclosure wherein the organic additive is dipropylenglycol and the nickel salt is nickel acetate tetrahydrate; and the mole ratio between the amount of organic additive and the amount of hydrogenation metals (Mo, Co, Ni) ranges from 0.09:1 to 0.8:1, preferentially from 0.2:1 to 0.7:1 and the molar ratio between the amount of nickel salt and the amount of hydrogenation metals (Mo, Co, Ni) is in the range from 0.001:1 to 0.2:1, preferentially from 0.01:1 to 0.15:1.

As mentioned above, the present disclosure also relates to the product obtainable by the process described herein. Thus, the expression "activated hydrotreating catalyst obtainable by the process of the present disclosure" is used here to define the catalyst by the process for obtaining it and refers to the product obtainable by the activation process comprising the steps i) and ii) as defined above. For the purposes of the invention the expressions "obtainable", "obtained" and equivalent expressions are used interchangeably, and in any case, the expression "obtainable" encompasses the expression "obtained".

All the embodiments of the compound of the invention contemplate all the combinations obtained by all the embodiments of the process of the invention and combinations thereof.

It has been observed that the hydrotreating catalyst obtainable by the method of the present disclosure shows a decrease in the metal-support interaction as shown by the decrease in the reduction temperature of the CoMo bimetallic species yielded by the Temperature Programmed Reduction (TPR) technique.

The activated hydrotreating catalyst obtainable by the process of the present disclosure may be used in the hydrotreating of a hydrocarbon feedstock under suitable hydrotreating process conditions. Typical hydrocarbon feeds can include petroleum-derived oils, such as atmospheric distillates, vacuum distillates, cracked distillates, raffinates, hydrotreated oils, deasphalted oils, and any other hydrocarbon that can be subject to hydrotreating. More specifically, the hydrocarbon feedstock can include straight-run feedstocks such as naphtha, kerosene, light gas oil, heavy gas oils and conversion feedstocks such as light cycle oil, cracking and coker naphtha, coker and visbreaking gas oil.

The hydrotreating conditions to which the hydrocarbon feedstock is treated in the presence of the activated hydrotreating catalyst are not critical and are selected by the skilled person in the art in view of the type and characteristics of the hydrocarbon feedstock. Generally, the hydrocarbon feedstock is contacted with the hydrotreating catalyst in the presence of hydrogen under hydrotreating conditions of temperature, pressure and hydrotreating liquid hourly space velocity (LHSV) and hydrogen/hydrocarbon volume ratio.

LHSV (units: $h^{-1}$) is calculated as volumetric flow rate divided by the catalyst volume in the reactor, and it is equivalent to the inverse of the residence time.

The catalyst is particularly suitable for use in ultra-deep hydrodesulfurisation, resulting in a product with a sulphur content below 200 ppm, more preferably below 100 ppm, particularly preferably below 50 ppm, even more preferably below 10 ppm.

Typical hydrotreating conditions are shown in Table 2:

Table 2: Typical operating conditions in hydrodesulfurization reactions

| Range of HDS conditions | |
|---|---|
| Total pressure (bar) | 20-90 |
| Temperature (°C) | 270-400 |
| LHSV ($h^{-1}$) | 0.5-10 |
| $H_2$/HC ($Nm^3/m^3$) | 50-1000 |

In all the examples described in the present disclosure the relative volume activity (RVA) was calculated from the constant rates k determined by considering the design equation of a tubular reactor and a kinetic equation of reaction order n = 1.4 (Eq. 1) [Oil & Gas Science and Technology - Rev. IFP, Vol. 62 (2007), No. 1, pp. 91-99]

$$k = \frac{LHSV}{1-n}\left(\frac{1}{S^{n-1}} - \frac{1}{S_0^{n-1}}\right) \qquad (1)$$

And the RVA value for each reactivated catalyst was determined as follows:

$$RVA = \frac{k_{react}}{k_{base}} \qquad (2)$$

where: $k_{react}$ and $k_{base}$ are the rate constants for the reactivated and reference catalyst, respectively.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow.

Throughout the description and claims the word "comprise" and variations of the word, are not intended to exclude other technical features, additives, components, or steps. Furthermore, the word "comprise" encompasses the case of "consisting of". Additional objects, advantages and features of the invention will become apparent to those skilled in the art upon examination of the description or may be learned by practice of the invention. The following examples are provided by way of illustration, and they are not intended to be limiting of the present invention. Furthermore, the present invention covers all possible combinations of particular and preferred embodiments described herein.

For the purposes of the invention, any ranges given include both the lower and the upper end-points of the range. Ranges given, such as temperatures, times, sizes, and the like, should be considered approximate, unless specifically stated.

EXAMPLES

In the following examples a hydrotreating catalyst had been used for two cycles of at least one year in the industrial unit. After each operational cycle the catalyst is deactivated due to coke deposition. In order to use it in a new operational cycle it is necessary to regenerate it by performing the following steps: i) hydrocarbon stripping under temperatures below about 300 °C and ii) the stripped catalyst is then contacted with an oxygen-containing gas stream at a temperature in the range 400-500 °C and atmospheric pressure.

The catalyst was an alumina-supported CoMo catalyst with the following properties (Table 3):

Table 3. Composition, textural and mechanical properties of the CoMo/Al$_2$O$_3$ catalyst

| | | Plant Regen |
|---|---|---|
| Carbon | wt% | 0.26 |
| Sulphur | wt% | 0.46 |
| Nitrogen Surface Area | m 2/g | 180 |
| Pore Volume | cc/g | 0.480 |
| Average Length | mm | 3.16 |
| Average Diameter | mm | 1.44 |
| Particles <2.0 mm | wt% | 6.30 |
| Compacted Bulk Density | g/cc | 0.778 |
| Sock loading density | g/cc | 0.653 |
| Dense loading density | g/cc | 0.774 |
| Fines < #18 Mesh | wt/g | 0.09 |
| Side Crush Strength | lbs/mm | 7.83 |
| Arsenic | wt/g | 0.01 |
| Iron | wt/g | 0.04 |
| Silicon | wt/g | 0.11 |
| Sodium | wt/g | 0.08 |
| Vanadium | wt/g | <0.01 |
| Lead | wt/g | 0.01 |
| Phosphorus | wt/g | 2.19 |
| Molybdenum | wt/g | 11.84 |
| Cobalt | wt/g | 3.11 |

Two different feedstocks were used in the catalytic activity tests, hereafter referred to as Set 1 and Set 2 (Tables 4 and 5).

Table 4. Chemical properties of the feedstock Set 1

| Feed (Set 1) | |
|---|---|
| Density (g/cm$^3$) | 0.8677 |
| S(%p) | 4140 |
| N (ppm) | 289 |
| Bromine number(g/100 g) | 1.13 |
| Distillation curve, ASTM Method D86 (°C) | |
| 5% | 241.2 |

(continued)

| Feed (Set 1) | |
|---|---|
| 10% | 262.2 |
| 20% | 288.4 |
| 30% | 304.5 |
| 50% | 329.7 |
| 70% | 353.7 |
| 80% | 365.8 |
| 90% | 381 |
| 95% | 393.3 |

Table 5. Chemical properties of the feedstock Set 2

| Feed (Set 2) | |
|---|---|
| Density(g/cm$^3$) | 0.86154 |
| S(%p) | 12240 |
| N (ppm) | 234 |
| Bromine number (g/100 g) | 20 |
| Distillation curve, ASTM Method D86 (°C) | |
| 5% | 201.4 |
| 10% | 221.4 |
| 20% | 244.2 |
| 30% | 261 |
| 50% | 293.2 |
| 70% | 324.5 |
| 80% | 344.4 |
| 90% | 366.8 |
| 95% | 382.9 |

Example 1. Activation with a nickel salt (comparative)

Three nickel carboxylic acid salts were tested: nickel formate, nickel acetate and nickel citrate.

An impregnation solution was prepared at room temperature containing nickel formate, nickel acetate tetrahydrate, and nickel citrate in an amount of 0.07, 0.03, 0.14 mole of nickel salt per mol of hydrogenation metals (Mo, Co, Ni), respectively. The concentration of each additive was 35.3 g/l of nickel formate, 25.3 g/l of nickel acetate and 272 g/l of nickel citrate.

The catalyst was impregnated via pore volume impregnation with the impregnation solution, without ageing step and subsequently dried at a temperature of 110 °C for 24 h.

The activated catalysts were used in ultra-deep hydrodesulfurisation reactions with a reaction order of 1.4, being the operation conditions as follows (Table 6):

Table 6. Operation conditions and feed properties in Example 1

| Reaction conditions | |
|---|---|
| LHSV, h-1 | 0.8 |

(continued)

| Reaction conditions | |
|---|---|
| P, kg/cm$^2$ | 50 |
| H$_2$/Feed Nl/l | 250 |
| **Feed properties** | |
| Density (g/cm$^3$) | 0.8677 |
| S (wt. %) | 4140 |
| N (ppm) | 289 |
| Bromine number (g/100 g) | 1.13 |
| Distillation curve, ASTM Method D86 (°C) | |
| 5% | 241.2 |
| 10% | 262.2 |
| 20% | 288.4 |
| 30% | 304.5 |
| 50% | 329.7 |
| 70% | 353.7 |
| 80% | 365.8 |
| 90% | 381 |
| 95% | 393.3 |

Calculated RVA values are summarized in Table 7:

Table 7. RVA values for the regenerated catalyst reactivated with nickel formiate, nickel acetate and nickel citrate.

| Catalyst | RVA |
|---|---|
| Regenerated + Nickel formate | 2.13 |
| Regenerated + Nickel acetate | 2.27 |
| Regenerated + Nickel citrate | 1.00 |

The reactivation with nickel acetate improves the HDS catalytic activity to a higher extent than reactivation with nickel formiate or nickel citrate.

Example 2. Activation with a complexing organic additive (comparative)

Two organic additives were tested:

- Citric acid
- Dipropilenglycol

The two aqueous impregnation solutions were prepared by dissolving the organic additive in water in a concentration of 285 g/l of citric acid and 112 g/l of DPG. The values of the molar ratios of citric acid and DPG per mol of hydrogenation metals (Mo, Co, Ni) were 0.35 and 0.15, respectively. The stability of impregnation solutions was tested for a 24 h time period. The catalyst support was impregnated with the aqueous stable solutions using the pore volume impregnation method described above. The catalyst precursors were then dried at 110 °C for 24 h under air thus providing the final hydrotreating activated catalysts.

The catalyst was impregnated via pore volume impregnation with the impregnation solution, without ageing step, and subsequently dried at a temperature of 110°C for 24 h.

The activated catalysts were used in ultra-deep hydrodesulfurisation reactions with a reaction order of 1.4, being the operation conditions as follows:

Table 8. Operation conditions and feed properties in Example 2

| Reaction conditions | |
|---|---|
| LHSV, h-1 | 1 |
| P, kg/cm$^2$ | 45 |
| H$_2$/feed Nl/l | 200 |
| **Feed properties** | |
| Density (g/cm$^3$) | 0,847 |
| S(%p) | 1,53 |
| N(ppm) | 182 |
| N° Br (g/100 g) | 2.91 |
| Distillation curve, ASTM Method D86 (°C) | |
| Initial Boiling Point (IBP) | 156 |
| 10% | 194 |
| 30% | 238 |
| 50% | 271 |
| 70% | 300 |
| 90% | 339 |
| Final Boiling Point (FBP) | 363 |

The reactivation with DPG enhances the HDS activity of the regenerated catalyst by 79% as compared to the regenerated catalyst. Also the HDS activity improves by 56% when reactivating the regenerated catalyst with citric acid (Table 9)

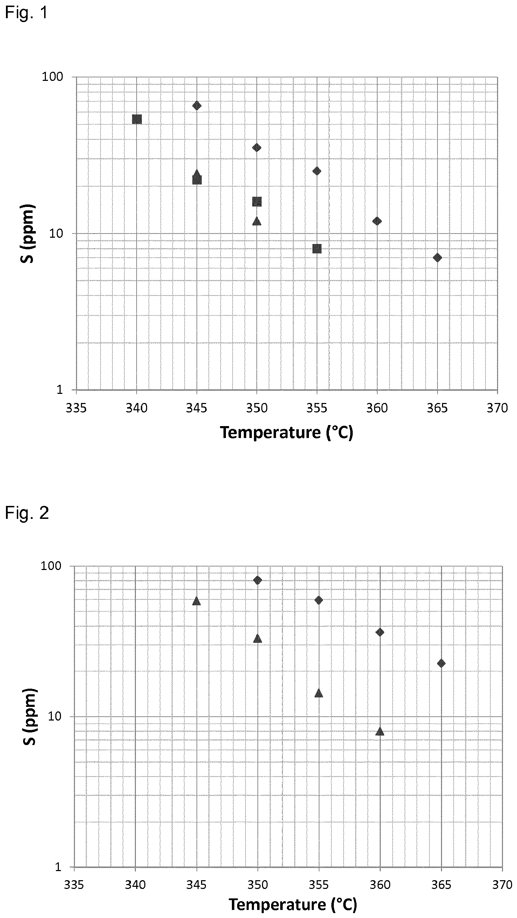

Fig. 1 shows the sulfur concentration in the product stream at different reaction temperatures for the regenerated catalyst, the regenerated catalyst reactivated with DPG and the regenerated catalyst reactivated with citric acid.

Table 9. RVA values for the regenerated catalyst, the regenerated catalyst reactivated with citric acid and the regenerated catalyst reactivated with DPG.

| Catalyst | RVA |
|---|---|
| Regenerated | 1.00 |
| Reg + Citric acid | 1.56 |
| Reg + DPG | 1.79 |

The reactivation with DPG improves the HDS catalytic activity to a higher extent than reactivation with citric acid.

It was observed that in order to obtain a similar RVA value (RVA 1.79), it was necessary to use a lower amount of DPG than citric acid (Table 10).

Table 10. Mass ratios Co/O and molar ratio additive/(Co + Mo) corresponding to citric acid and DPG.

| Additive | Mass ratio Co/O | Molar ratio Additive/(Co + Mo) |
|---|---|---|
| Citric acid | 0.38 | 0.35 |
| DPG | 2.02 | 0.15 |

Example 3.

a) Regenerated catalyst vs catalyst reactivated with DPG + nickel acetate

An impregnation solution was prepared at room temperature containing nickel acetate tetrahydrate +dipropilenglycol as additives in an amount of 0.325 mole of additives per mol of hydrogenation metals (Mo, Co, Ni), respectively. The concentration of each additive was 130 g/l of DPG and 24.5 g/l of nickel acetate tetrahydrate. This solution was used to impregnate a regenerated CoMo catalyst after being used for two cycles in an industrial reactor, following the pore volume impregnation method. The catalyst had been regenerated twice, one time after each operation cycle.

The catalyst was impregnated via pore volume impregnation with the impregnation solution, without ageing step, and subsequently dried at a temperature of 110 °C for 24 h

Table 11. Operation conditions and feed properties in Example 3a

| Reaction conditions | |
|---|---|
| LHSV, $h^{-1}$ | 0.8 |
| P, $kg/cm^2$ | 50 |
| $H_2$/feed Nl/l | 250 |
| Gases, Nl/h | 45 |
| **Feed properties (Set 1)** | |
| Density($g/cm^3$) | 0.8677 |
| S(%p) | 4140 |
| N (ppm) | 289 |
| Bromine number(g/100 g) | 1.13 |
| Distillation curve, ASTM Method D86 (°C) | |
| 5% | 241.2 |
| 10% | 262.2 |
| 20% | 288.4 |
| 30% | 304.5 |
| 50% | 329.7 |
| 70% | 353.7 |
| 80% | 365.8 |
| 90% | 381 |
| 95% | 393.3 |

Table 12: Sulfur and nitrogen concentrations (ppm) in desulfurized reaction product over the regenerated catalyst and the catalyst reactivated with DPG + nickel acetate

| Catalyst | T, °C | 345 | 350 | 355 | 360 | 365 |
|---|---|---|---|---|---|---|
| Regenerated | S, ppm | | 80 | 59 | 36 | 22.5 |
| | N, ppm | | 26 | 29 | 22 | 15.7 |
| Reg + DPG + Nickel acetate | S, ppm | 58.3 | 33 | 14 | 8 | |
| | N, ppm | 14.4 | 13 | 2 | 0 | |

Fig. 2 shows the sulfur concentration of the product stream at different reaction temperatures for the regenerated catalyst and the regenerated catalyst reactivated with DPG + nickel acetate.

The reactivation with DPG + Nickel acetate improves significantly the HDS activity of the regenerated catalyst.

Table 13. RVA values of regenerated catalyst and regenerated catalyst reactivated with DPG + nickel acetate

| Catalyst | RVA | Set |
|---|---|---|
| Regenerated | 1 | 1 |
| Reg + DPG + Nickel acetate | 2.3 | 1 |

b) Fresh catalyst vs fresh catalyst reactivated with DPG + nickel acetate

An impregnation solution was prepared at room temperature containing nickel acetate tetrahydrate +dipropilenglycol as additives in an amount of 0.325 mole of additives per mol of hydrogenation metals (Mo, Co, Ni), respectively. The concentration of each additive was 130 g/l of DPG and 24.5 g/l of nickel acetate tetrahydrate. This solution was used to impregnate a fresh CoMo catalyst following the pore volume impregnation method. After impregnation the as-prepared catalyst was dried at 110 °C for 4 h.

Table 14. Operation conditions and feed properties in Example 3b

| Reaction conditions | |
|---|---|
| LHSV, $h^{-1}$ | 0.8 |
| P, kg/$cm^2$ | 50 |
| $H_2$/feed Nl/l | 250 |
| Gases, Nl/h | 45 |
| **Feed properties (Set 1)** | |
| Density (g/$cm^3$) | 0.8677 |
| S(%p) | 4140 |
| N (ppm) | 289 |
| Bromine number(g/100 g) | 1.13 |
| Distillation curve, ASTM Method D86 (°C) | |
| 5% | 241.2 |
| 10% | 262.2 |
| 20% | 288.4 |
| 30% | 304.5 |
| 50% | 329.7 |
| 70% | 353.7 |
| 80% | 365.8 |
| 90% | 381 |
| 95% | 393.3 |

Table 15. Sulfur and nitrogen concentrations (ppm) in the desulfurized reaction product over the fresh catalyst and the fresh catalyst reactivated with DPG + nickel acetate

| Catalyst | T, °C | 340 | 345 | 350 | 355 | 360 | 365 |
|---|---|---|---|---|---|---|---|
| Fresh | S, ppm | | | 50 | 36.5 | 20.7 | 10.8 |
| | N, ppm | | | 23 | 20.7 | 14.6 | 7.7 |

(continued)

| Fresh catalyst reactivated with DPG + nickel acetate | S, ppm | 89.5 | 54.9 | 31 | 18.9 | 8.7 | |
|---|---|---|---|---|---|---|---|
| | N, ppm | 46.5 | 23.7 | 15 | 8.4 | 2.5 | |

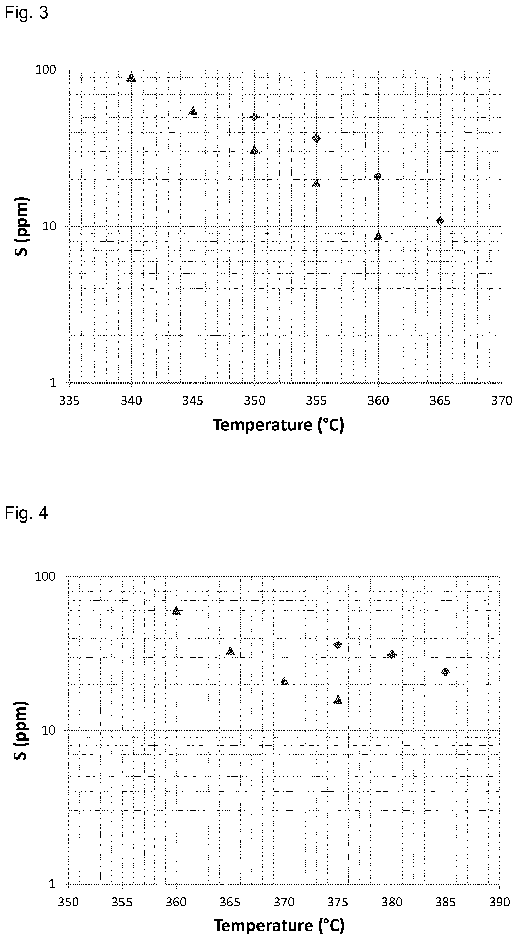

Fig. 3 shows the sulfur concentration in the product stream as a function of reaction temperature for the fresh catalyst and the fresh catalyst after reactivation with DPG + nickel acetate.

The reactivation with DPG + nickel acetate improves the HDS activity of the fresh catalyst by 30% as shown by the RVA data on Table 16:

Table 16. RVA values of fresh catalyst and fresh catalyst reactivated with DPG + nickel acetate

| Catalyst | RVA | Set |
|---|---|---|
| Fresh | 1 | 1 |
| Fresh + DPG + nickel acetate | 1.3 | 1 |

c) Regenerated catalyst reactivated with DPG + nickel acetate vs Regenerated catalyst reactivated with DPG

An impregnation solution was prepared at room temperature containing dipropilenglycol in an amount of 0.286 mole of additive per mol of hydrogenation metals (Mo, Co, Ni). The concentration of DPG was 130 g/l. This solution was used to impregnate a CoMo catalyst following the pore volume impregnation method after being used for two operation cycles in an industrial unit. The regenerated catalyst had been regenerated twice, one time after each operation cycle. After impregnation the catalyst was dried at 110 °C for 4 h.

Similarly, an aqueous solution was prepared at room temperature containing 0.286 mol of DPG and 0.029 mol of nickel acetate per mol of hydrogenation metals (Mo, Co, Ni), respectively. The concentration of each aditive was 130 g/l of DPG and 24.5 g/l of nickel acetate. This solution was used to impregnate a regenerated CoMo catalyst.

The HDS activity of the two as-prepared catalysts was tested and compared.

Table 17. Operation conditions and feed properties in Example 3c

| Reaction conditions | |
|---|---|
| LHSV, h$^{-1}$ | 1 |
| P, kg/cm$^2$ | 35 |
| H$_2$/feed Nl/l | 200 |
| Gases, Nl/h | 45 |
| **Feed properties (Set 2)** | |
| Density(g/cm$^3$) | 0.86154 |
| S(%p) | 12240 |
| N (ppm) | 234 |
| Bromine number (g/100 g) | 20 |
| Distillation curve, ASTM Method D86 (°C) | |
| 5% | 201.4 |
| 10% | 221.4 |
| 20% | 244.2 |
| 30% | 261 |
| 50% | 293.2 |
| 70% | 324.5 |
| 80% | 344.4 |
| 90% | 366.8 |

(continued)

| Feed properties (Set 2) | |
|---|---|
| 95% | 382.9 |

Table 18. Sulfur and nigrogen concentrations (ppm) in the desulfurized reaction product over the regenerated catalyst reactivated with DPG and the regenerated catalyst reactivated with DPG + nickel acetate

| Regenerated catalyst reactivated with: | T, °C | 360 | 365 | 370 | 375 | 380 | 385 |
|---|---|---|---|---|---|---|---|
| DPG | S, ppm | | | 34.9 | 36.2 | 31.1 | 24 |
| | N, ppm | | | 31 | 38 | 43 | 41.5 |
| DPG + nickel acetate | S, ppm | 60 | 33 | 21 | 16 | | |
| | N, ppm | 52 | 39 | 32 | 31 | | |

Fig. 4 shows the sulfur concentration in the product stream as a function of reaction temperature for the regenerated catalyst reactivated with DPG and the reactivated catalyst reactivated with DPG + nickel acetate.The reactivation with DPG + nickel acetate improves the HDS activity by 20% as compared with the regenerated catalyst reactivated with DPG only.

Table 19. RVA values of regenerated catalyst and regenerated catalyst reactivated with DPG + nickel acetate

| Catalyst | RVA | Set |
|---|---|---|
| Reg + DPG | 1 | 2 |
| Reg + DPG + Nickel acetate | 1.2 | 2 |

d) Regenerated catalyst vs regenerated catalyst with DPG + nickel acetate and vs regenerated catalyst with nickel acetate

An aqueous solution was prepared at room temperature containing 0.286 mol of DPG and 0.029 mol of nickel acetate tetrahydrate per mol of hydrogenation metals (Mo, Co, Ni). The concentration of each additive was 130 g/l of DPG and 24.5 g/l of nickel acetate.. This solution was used to impregnate a CoMo catalyst regenerated after being used for two cycles in an industrial unit. The catalyst had been regenerated twice, one time after each operation cycle. After the impregnation step the catalyst was dried at 110 °C for 4 h.

Similarly, an aqueous solution containing 0.029 mol of nickel acetate per mol of hydrogenation metals (Mo, Co, Ni) was prepared. The concentration of nickel acetate was 24.5 g/l. This solution was used to impregnate a regenerated CoMo catalyst.

The HDS activity of the regenerated catalyst reactivated with nickel acetate is compared with that of the regenerated catalyst reactivated with DPG + nickel acetate tetrahydrate.

Table 20. Operation conditions and feed properties in Example 3d

| Reaction conditions | |
|---|---|
| LHSV, $h^{-1}$ | 0.8 |
| P, $kg/cm^2$ | 50 |
| $H_2$/feed Nl/l | 250 |
| Gases, Nl/h | 45 |
| Feed properties (Set 1) | |
| Density ($g/cm^3$) | 0.8677 |
| S(%p) | 4140 |

(continued)

| Feed properties (Set 1) | |
|---|---|
| N (ppm) | 289 |
| Bromine number (g/100 g) | 1.13 |
| Distillation curve, ASTM | |
| Method D86 (°C) | |
| 5% | 241.2 |
| 10% | 262.2 |
| 20% | 288.4 |
| 30% | 304.5 |
| 50% | 329.7 |
| 70% | 353.7 |
| 80% | 365.8 |
| 90% | 381 |
| 95% | 393.3 |

Table 21. Sulfur and nitrogen concentrations in the reaction product for the regenerated catalyst, the regenerated catalyst reactivated with DPG + nickel acetate and the regenerated catalyst reactivated with nickel acetate only.

| Catalyst | T, °C | 345 | 350 | 355 | 360 | 365 | 370 |
|---|---|---|---|---|---|---|---|
| Regenerated | S, ppm | | 80 | 59 | 36 | 22.5 | |
| | N, ppm | | 26 | 29 | 22 | 15.7 | |
| Reg+ DPG + nickel acetate | S, ppm | 58.3 | 33 | 14 | 8 | | |
| | N, ppm | 14.4 | 13 | 2 | 0 | | |
| Reg + Nickel acetate | S, ppm | | 69 | 45 | 24 | 17.2 | 6.3 |
| | N, ppm | | 26 | 23 | 8 | 2.8 | 0.5 |

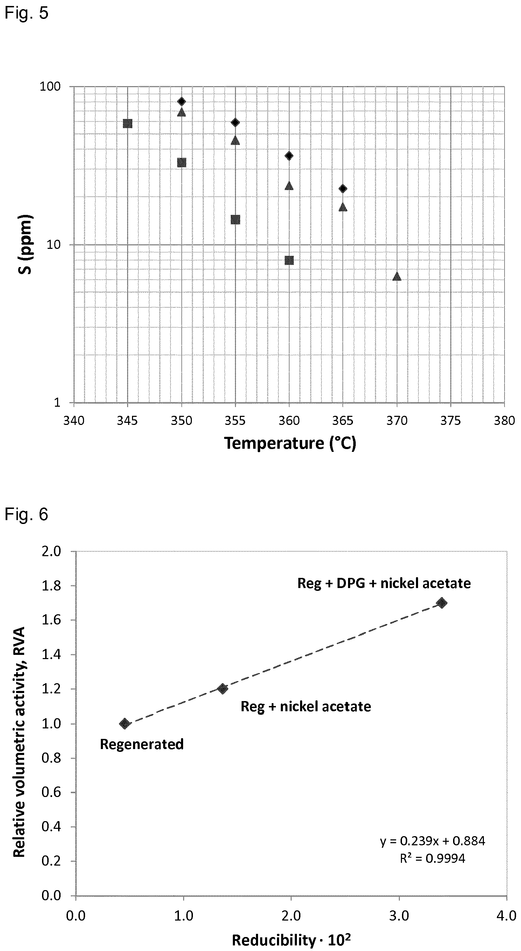

Fig. 5 shows the sulfur concentration in the product stream as a function of reaction temperature for the regenerated catalyst, the regenerated catalyst reactivated with DPG + nickel acetate and the regenerated catalyst reactivated with nickel acetate. The reactivation with DPG + nickel acetate improves the HDS activity of the regenerated catalyst to a higher extent than the reactivation with nickel acetate only.

Table 22. RVA values of the regenerated catalyst and the regenerated catalyst reactivated with nickel acetate and DPG + nickel acetate

| Catalyst | RVA | Set |
|---|---|---|
| Regenerated | 1 | 1 |
| Reg + nickel acetate | 1.3 | 1 |
| Reg + DPG + nickel acetate | 2.3 | 1 |

The examples 5-8 show the preparation of different catalysts by using different reactivating solutions. Temperature-programmed reduction (TPR) was used to characterise the as-prepared catalysts as well as the regenerated catalyst as a reference. This technique can be used to analyse the reducibility of different chemical species as well as the degree of interaction between metals (Co and Mo) and metal-support. Several studies in the literature have shown that there is a correlation between the reducibility of CoMo catalysts in their oxidic state and the HDS activity of the sulfided catalysts [Y.W. Chen, et al. Industrial & Engineering Chemistry Research 1990 29 (9), 1830-1840; Sandor Göbölös et al. J. Chem. Soc., Faraday Trans. 1, 1986,82, 2423-2434; R. Thomas et al. J. Catal. 1982, 76, 241; S. Betteridge et al. Appl. Catal. 1986, 23, 413.]. Thus, the TPR technique may be employed to elucidate the HDS activities of CoMo catalysts reactivated through different procedures from the degree of reducibility obtained from the TPR measurement. This suggests that catalysts exhibiting a lower reduction temperature in the TPR profile will show a higher HDS activity. The catalysts prepared in example 3 were characterised by TPR. From the deconvolution of the TPR profiles, the different chemical species present in the regenerated and reactivated catalysts can be studied including: $Co_3O_4$ with weak and strong interactions with the support, bimetallic CoMo and tetrahedral molybdenum oxide species. Reducibility of a CoMo catalyst was defined from the TPR profile as shown in equation 3:

$$\mathrm{Re}ducibility = \frac{\%Co_3O_4}{T(CoMo)} \qquad (3)$$

where:

$\%Co_3O_4$: area percent of the $Co_3O_4$ species with weak interaction with the support determined from the deconvolution of the TPR curve. These species are reduced at temperatures between 370-390 °C.
$T(CoMo)$: reduction temperature of the band ascribed to bimetallic CoMo species in the TPR profile. Typically, bimetallic CoMo species are reduced at temperatures in the range 480-600 °C. However, depending upon the reactivating procedure this temperature can be diminished thereby favouring the reducibility of the catalyst.

From the experimental activity data and the catalyst characterisation by TPR the following correlation between RVA and reducibility was obtained:

$$RVA = 0.239 \cdot \mathrm{Re}ducibility + 0.884 \qquad (4)$$

This methodology can be employed only to compare a single type of catalyst (*i.e.,* regenerated and after reactivation) but not to compare catalysts prepared by different routes, different chemical composition or provided by different suppliers.
Figure 6 shows the linear correlation between the relative volumetric activity and the catalyst reducibility. Furthermore, the catalyst reactivated with DPG + nickel acetate exhibits the highest reducibility and therefore the highest relative volumetric activity.
In examples 5-8, catalytic activity tests were not performed but catalyst reducibility was calculated from the TPR curve (Eq. 4) thereby allowing to compare the effectiveness of different reactivation procedures.

Example 5. Comparison between acetic acid and nickel acetate combined with DPG as the reactivating aqueous solution

An aqueous solution was prepared at room temperature containing 0.286 mol of DPG and 0.120 mol of acetic acid per mol of hydrogenation metals (Mo, Co, Ni). The concentration of each additive was 130 g/l of DPG and 24.5 g/l of acetic acid. This solution was used to impregnate a CoMo regenerated catalyst following the pore volume impregnation method after being used for two operation cycles in an industrial unit. The catalyst had been regenerated twice, one time after each operation cycle. After impregnation the catalyst was dried at 110 °C for 4 h. Another aqueous solution was prepared at room temperature containing 0.286 mol of DPG and 0.029 mol of nickel acetate tetrahydrate per mol of hydrogenation metals (Mo, Co, Ni). The concentration of each additive was 130 g/l DPG and 24.5 g/l of nickel. This solution was used to impregnate the aforementioned CoMo catalyst.

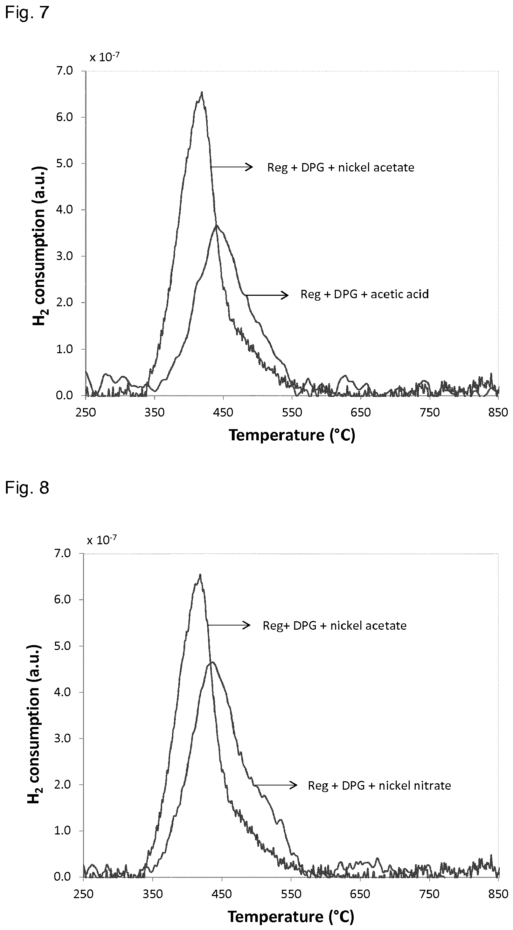

Figure 7 shows the TPR profile of the regenerated catalyst after reactivation with DPG + nickel acetate and the regenerated catalyst after reactivation with DPG + acetic acid. After deconvolution of the profiles, reducibility of these catalysts was calculated using equation 3. Reactivation with DPG + nickel acetate leads to a catalyst with a higher reducibility and therefore HDS activity than reactivation with DPG + acetic acid (Table 23).

Table 23. Reducibility of the regenerated catalyst and the regenerated catalyst reactivated with DPG + acetic acid and DPG + nickel acetate.

| Catalyst | Reducibility |
|---|---|
| Regenerated | 0.46 |
| Reg + DPG + acetic acid | 0.81 |

(continued)

| Catalyst | Reducibility |
|---|---|
| Reg + DPG + nickel acetate | 3.40 |

Example 6. Comparison between nickel acetate and nickel nitrate combined with DPG as reactivating solutions

An aqueous solution was prepared at room temperature containing 0.286 mol of DPG and 0.025 mol of nickel nitrate per mol of hydrogenation metals (Mo, Co, Ni). The concentration of each additive was 130 g/l of DPG and 24.5 g/l of nickel nitrate.This solution was used to impregnate a CoMo catalyst following the pore volume impregnation method after being used for two operation cycles in an industrial unit. The regenerated catalyst had been regenerated twice, one time after each operation cycle. After impregnation the catalyst was dried at 110 °C for 4 h. Also, another aqueous solution was prepared at room temperature containing 0.286 g/l of DPG and 0.029 g/l of nickel acetate tetrahydrate pero mol of hydrogenation metals (Mo, Co, Ni). The concetration of each additive was 130 g/l of DPG and 24.5 g/l of nickel acetate. This solution was used to impregnate the aforementioned catalyst.
Figure 8 shows the TPR profile of the regenerated catalyst after reactivation with DPG + nickel acetate and the regenerated catalyst after reactivation with DPG + nickel nitrate. From the deconvolution of the TPR profiles the reducibility of the catalysts was determined using equation 3. The results demonstrated that the catalyst reactivated with DPG + nickel acetate shows a higher reducibility and therefore a higher HDS activity than the catalyst reactivated with DPG + nickel nitrate (Table 24).

Table 24. Reducibility of the regenerated catalyst and the regenerated catalyst reactivated with DPG + nickel acetate and DPG + nickel nitrate.

| Catalyst | Reducibility |
|---|---|
| Regenerated | 0.46 |
| Reg + DPG + nickel acetate | 3.40 |
| Reg + DPG + nickel nitrate | 1.50 |

Example 7. Catalyst reactivation with DPG + nickel acetate with varying concentrations of nickel acetate

Three aqueous solutions containing a constant concentration of DPG (130 g/l DPG, 0.286 mol DPG/mol Co+Mo+Ni) and varying concentrations of nickel acetate (15, 24.5 and 70 g/l) were prepared and used to impregnate a CoMo catalyst following the pore volume impregnation method. These concentrations of nickel acetate correspond to the following values of molar ratios of nickel acetate per mol of hydrogenation metals (Mo, Co, Ni): 0.017, 0.029 and 0.083, respectively. The regenerated catalyst had been used for two operation cycles in an industrial unit and had been regenerated twice, one time after each operation cycle. After impregnation the three catalysts were dried at 110 °C for 4 h.

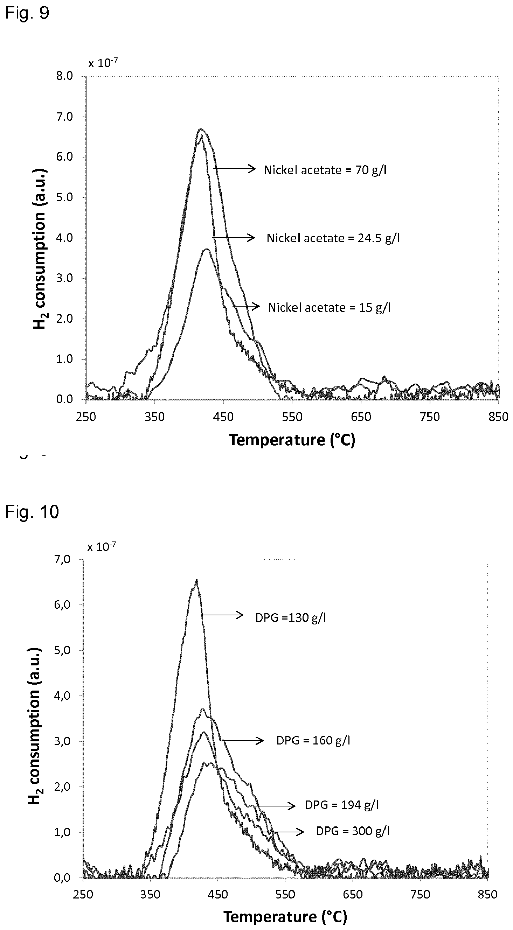

Figure 9 shows the TPR profile of the regenerated catalysts after reactivation with DPG (130 g/l) and varying concentrations of nickel acetate (15, 24.5 and 70 g/l). It is observed that reactivation with a concentration of nickel acetate of 24.5 g/l shows an optimal reducibility of the chemical species and hence a higher HDS activity (Table 25).

Table 25. Reducibility of the regenerated catalyst and the regenerated catalyst reactivated with DPG + nickel acetate with varying concentrations of nickel acetate.

| Catalyst | Reducibility |
|---|---|
| Regenerated | 0.46 |
| Reg + 130 g/l DPG + 15 g/l nickel acetate | 2.78 |
| Reg + 130 g/l DPG + 24.5 g/l nickel acetate | 3.40 |
| Reg + 130 g/l DPG + 70 g/l nickel acetate | 2.85 |

Example 8. Catalyst reactivation with DPG + nickel acetate with varying concentrations of DPG.

Three aqueous solutions containing a constant concentration of nickel acetate (24.5 g/l, 0.029 mol of nickel acetate/mol of Mo+Co+Ni) and varying concentrations of DPG (130, 160, 194 and 300 g/l) were prepared and used to impregnate a CoMo catalyst following the pore volume impregnation method. The four concentrations of DPG correspond to the following values of mol of DPG per mol of hydrogenation metals (Mo, Co, Ni): 0.286, 0.351, 0.426 and 0.659, respetively. The regenerated catalyst had been used for two operation cycles in an industrial unit and had been regenerated twice, one time after each operation cycle. After impregnation the three catalysts were dried at 110 °C for 4 h.

In Figure 10 it is shown the TPR profile of the regenerated catalysts after reactivation with nickel acetate (24.5 g/l) and varying concentrations of DPG (130, 160, 194 and 300 g/l). Reactivation with the lowest concentration of DPG (130 g/l) yields a higher reducibility of the chemical species and hence a higher HDS activity as compared with the catalysts reactivated with a DPG concentration of 160, 194 and 300 g/l (Table 26).

Table 26. Reducibility of the regenerated catalyst and the regenerated catalyst reactivated with DPG + nickel acetate with varying concentrations of DPG.

| Catalyst | Reducibility |
|---|---|
| Regenerated | 0.46 |
| Reg + 130 g/l DPG + 24.5 g/l nickel acetate | 3.40 |
| Reg + 160 g/l DPG + 24.5 g/l nickel acetate | 3.22 |
| Reg + 194 g/l DPG + 24.5 g/l nickel acetate | 2.85 |
| Reg + 300 g/l DPG + 24.5 g/l nickel acetate | 1.87 |

REFERENCES CITED IN THE APPLICATION

WO2005035691

EP1718408

WO9641848

M. Digne, et al. Oil & Gas Science and Technology - Rev. IFP, Vol. 62 (2007), No. 1, pp. 91-99

Y.W. Chen et al. Industrial & Engineering Chemistry Research 1990 29 (9), 1830-1840

Sandor Göbölös et al. J. Chem. Soc., Faraday Trans. 1, 1986,82, 2423-2434

R. Thomas et al. J. Catal. 1982, 76, 241-253.

S. Betteridge et al. Appl. Catal. 1986, 23, 413-424.

**Claims**

1.  A process for improving the catalytic activity of an hydrotreating catalyst comprising as hydrogenation metals at least a group VIB metal oxide and at least a Group VIII metal oxide on a carrier, the hydrotreating catalyst being either a fresh hydrotreating catalyst or an used hydrotreating catalyst which has been regenerated, the process comprising:

    i) contacting the catalyst with an stable aqueous impregnation solution comprising:

       a) a nickel salt of a carboxylic acid or a nickel salt of an inorganic acid; and
       b) an organic additive having complexing properties with the hydrogenation metals present in the catalyst, which is selected from

          i) an aliphatic alcohol or a (poly)ether of an aliphatic alcohol comprising at least two hydroxyl groups and 2-10 carbon atoms per molecule, with a boiling point comprised from 150 to 300 °C and completely soluble in water at 25°C,

ii) a compound comprising at least one covalently bonded nitrogen atom and at least one carbonyl moiety; and

iii) an organic acid comprising at least one carboxylic group and 1-20 carbon atoms

wherein the nickel salt concentration in the impregnation solution is in the range of 15-70 g/L; and the organic additive concentration in the impregnation solution is in the range of 50-300 g/L, resulting in an impregnated catalyst; and

ii) drying the impregnated catalyst so as to remove at least 90% of the water of the aqueous solution.

2.  The process according to claim 1 wherein the organic additive is at least an aliphatic alcohol or a (poly)ether of an aliphatic alcohol comprising at least two hydroxyl groups and 2-10 carbon atoms per molecule selected formmono-noethylene glycol, monopropylene glycol, glycerol, dipropylene glycol, tripropylene glycol, polypropylene glycol, , diethylene glycol, triethylene glycol, tetraethylene glycol and polyethylene glycol.

3.  The process according to claim 1 wherein the organic additive is at least an organic acid comprising at least one carboxylic group and 1-20 carbon atoms selected from acetic acid, citric acid, maleic acid, formic acid, glycolic acid, tartaric acid, oxalic acid and ascorbic acid.

4.  The process according to claim 1 wherein the organic additive is selected from dipropylene glycol, citric acid and acetic acid.

5.  The process according to any of claims 1-4, wherein the nickel salt is selected from nickel acetate,nickel carbonate, nickel citrate and nickel formiate.

6.  The process according to any of claims 1-2, wherein the stable impregnation aqueous solution comprises nickel acetate tetrahydrate and dipropylene glycol.

7.  The process according to any of claims 1-6, wherein the molar ratio between the amount of organic additive and the amount of hydrogenation metals is from 0.09:1 to 0.8:1; and the molar ratio between the amount of nickel salt and the amount of hydrogenation metals is from 0.001:1 to 0.2:1.

8.  The process according to any of claims 1-7, wherein the molar ratio between the amount of organic additive and the amount of hydrogenation metals is from 0.2:1 to 0.6:1; and the molar ratio between the amount of nickel salt and the amount of hydrogenation metals is from 0.006:1 to 0.05:1.

9.  The process according to any of claims 1-8, wherein the hydrotreating catalyst to be activated comprises a molybdenum oxide compound, and an oxide compound of nickel or cobalt, deposited on a carrier.

10. The process according to any of claims 1-9, wherein the hydrotreating catalyst to be activated is a hydrogenation catalyst, hydrodesulfurization catalyst, hydrodenitrogenation catalyst, hydrodemetallization catalyst, hydrofinishing catalyst, hydrodearomatization catalyst, hydroisomerization catalyst, hydrodewaxing catalyst or a hydrocracking catalyst.

11. The process according to any of claims 1-10, wherein the hydrotreating catalyst is a hydrodesulfuration catalyst.

12. A hydrotreating catalyst obtainable by the process of any of claims 1-11.

13. The hydrotreating catalyst of claim 12, wherein the organic additive is dipropylenglycol and the nickel salt is nickel acetate tetrahydrate; and the mole ratio between the amount of organic additive and the amount of hydrogenation metals is 0.09:1 to 0.8:1; and the molar ratio between the amount of nickel salt and the amount of hydrogenation metals is 0.001:1 to 0.2:1.

14. A process for hydrotreating a hydrocarbon feed in which a hydrocarbon feed is contacted under hydrotreating conditions with a catalyst according to any one of claims 12-13, which optionally has been presulfided before it is contacted with the hydrocarbon feed.

Fig. 1

Fig. 2

Fig. 3

Fig. 4

Fig. 5

Fig. 6

Fig. 7

Fig. 8

Fig. 9

Fig. 10

Europäisches
Patentamt

European
Patent Office

Office européen
des brevets

# EUROPEAN SEARCH REPORT

Application Number

EP 16 38 2495

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/258779 A1 (MCCARTHY STEPHEN J [US] ET AL) 15 October 2009 (2009-10-15) | 1-5,7-14 | INV. B01J37/02 |
| A | * paragraphs [0002], [0006], [0012], [0013], [0026] - [0033] * <br> * Examples * | 6 | B01J38/62 B01J23/85 B01J31/06 C10G45/08 |
| | ----- | | |
| A | RU 2 528 988 C1 (OOO NIAP KATALIZATOR [RU]) 20 September 2014 (2014-09-20) <br> * figures 1-3 * <br> * Examples * | 1-14 | |
| | ----- | | |

TECHNICAL FIELDS SEARCHED (IPC)

B01J
C10G

The present search report has been drawn up for all claims

| Place of search | Date of completion of the search | Examiner |
|---|---|---|
| The Hague | 31 March 2017 | Pardo Torre, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

# EP 3 315 195 A1

## ANNEX TO THE EUROPEAN SEARCH REPORT
## ON EUROPEAN PATENT APPLICATION NO.

EP 16 38 2495

This annex lists the patent family members relating to the patent documents cited in the above-mentioned European search report.
The members are as contained in the European Patent Office EDP file on
The European Patent Office is in no way liable for these particulars which are merely given for the purpose of information.

31-03-2017

| Patent document cited in search report | | | Publication date | Patent family member(s) | | | Publication date |
|---|---|---|---|---|---|---|---|
| US 2009258779 | A1 | | 15-10-2009 | AU | 2009234361 | A1 | 15-10-2009 |
| | | | | CA | 2720751 | A1 | 15-10-2009 |
| | | | | CN | 102056664 | A | 11-05-2011 |
| | | | | EP | 2268399 | A2 | 05-01-2011 |
| | | | | JP | 2011516259 | A | 26-05-2011 |
| | | | | US | 2009258779 | A1 | 15-10-2009 |
| | | | | WO | 2009126278 | A2 | 15-10-2009 |
| RU 2528988 | C1 | | 20-09-2014 | | | | |

EPO FORM P0459

For more details about this annex : see Official Journal of the European Patent Office, No. 12/82

28

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005035691 A
- EP 1718408 A
- WO 9641848 A

**Non-patent literature cited in the description**

- *Oil & Gas Science and Technology - Rev. IFP,* 2007, vol. 62 (1), 91-99
- **Y.W. CHEN et al.** *Industrial & Engineering Chemistry Research,* 1990, vol. 29 (9), 1830-1840
- **SANDOR GÖBÖLÖS et al.** *J. Chem. Soc., Faraday Trans. 1,* 1986, vol. 82, 2423-2434
- **R. THOMAS et al.** *J. Catal.,* 1982, vol. 76, 241
- **S. BETTERIDGE et al.** *Appl. Catal.,* 1986, vol. 23, 413
- **M. DIGNE et al.** *Oil & Gas Science and Technology - Rev. IFP,* 2007, vol. 62 (1), 91-99
- **R. THOMAS et al.** *J. Catal.,* 1982, vol. 76, 241-253
- **S. BETTERIDGE et al.** *Appl. Catal.,* 1986, vol. 23, 413-424